# EUROPÄISCHE PATENTANMELDUNG

(11) **EP 2 990 685 A1**
(43) Veröffentlichungstag der Anmeldung: **02.03.2016**
(21) Anmeldenummer: 15181616.2
(22) Anmeldetag: 19.08.2015
(51) Int. Cl.: F16F 9/53, F16F 9/14

(54) **FAHRRADELEMENT**

(30) Priorität: 26.08.2014 DE 202014006806 U
(71) Anmelder: Canyon Bicycles GmbH, 56073 Koblenz (DE)
(72) Erfinder: Zeindl, Benedikt, 94508 Schöllnach (DE)
(74) Vertreter: von Kreisler Selting Werner - Partnerschaft von Patentanwälten und Rechtsanwälten mbB

(57) **Zusammenfassung**

Ein Fahrradelement weist das Fahrradbauteil (10) sowie ein zweites Fahrradbauteil (12) auf. Die beiden Fahrradbauteile (10, 12) sind über ein Schwenkelement (14) schwenkbar miteinander verbunden. In dem Schwenkelement (14) ist eine Dämpfungsflüssigkeit zur Dämpfung von Schwenkbewegungen vorgesehen. Mit Hilfe eines Variierungselements wie eines Elektromagneten (22) können die Dämpfungseigenschaften verändert werden.

## Beschreibung

Die Erfindung betrifft ein Fahrradelement, wie Bauteile eines Fahrradrahmens, eines Fahrradhinterbaus und/ oder einer Fahrradgabel.

Ein Fahrradrahmen umfasst neben dem Fahrradrahmen selbst als weitere Fahrradelemente eine Fahrradgabel und einen Fahrradhinterbau. Hierbei kann der Fahrradhinterbau fest mit dem Fahrradrahmen verbunden oder über entsprechende Schwenkelemente mit dem Fahrradrahmen als schwenkbarer Fahrradhinterbau ausgebildet sein. Derartige schwenkbare Fahrradhinterbauten sind insbesondere bei Mountainbikes und Trekkingrädern vorgesehen, so dass das Hinterrad gegenüber dem Fahrradrahmen zusammen mit dem Hinterbauelement bewegt und die Bewegung über ein Dämpfungselement gedämpft werden kann. Der Fahrradhinterbau ist hierbei beispielsweise gelenkig im Bereich der Tretlageraufnahme mit dem Fahrradrahmen verbunden. Im Bereich dieser Verbindung verlaufen üblicherweise zwei Kettenstreben in Fahrtrichtung nach hinten und tragen die Hinterradnabe. In diesem Bereich der Ausfallenden sind zwei Sattelstreben in Richtung des Sattelstützrohrs des Rahmens geführt und mit diesem beispielsweise über ein Wippenelement schwenkbar verbunden. Zwischen dem Wippenelement und einem Oberrohr, einem Unterrohr oder einem Sattelstützrohr kann ein lineares Dämpfungselement zur Dämpfung der Hinterradbewegung vorgesehen sein. Es sind eine Vielzahl unterschiedlicher Ausgestaltungen eines schwenkbaren Hinterbaus zur Dämpfung einer Hinterradbewegung bekannt. Des Weiteren ist es bekannt, einzelne Bauteile eines Fahrrads schwenkbar miteinander zu verbinden, wobei es sich hierbei nicht nur um Verbindungen von Bauteilen des Hinterbaus mit dem Fahrradrahmen, sondern auch von Bauteilen des Fahrradrahmens selbst handelt. Beispielsweise kann das Sattelstützrohr schwenkbar mit einer Tretlageraufnahme verbunden sein. Entsprechende Schwenkelemente können gegebenenfalls auch zwischen dem Sattelstütz- und dem Oberrohr oder anderen Bauteilen des Fahrradrahmens vorgesehen sein.

Zur Dämpfung von Schwenkbewegungen zwischen über ein Schwenkelement miteinander verbundenen Fahrradbauteilen ist es bekannt, Lineardämpfer vorzusehen. Hierzu ist es erforderlich, die im Schwenkelement auftretende Dreh- bzw. Schwenkbewegung in eine Linearbewegung überzuführen, oder bekannte Lineardämpfer einzusetzen.

Aufgabe der Erfindung ist es, ein Fahrradelement zu schaffen, bei dem die Dämpfungs- und Schwenkbewegung vereinfacht ist.

Die Lösung der Aufgabe erfolgt erfindungsgemäß durch die Merkmale des Anspruchs 1.

Das erfindungsgemäße Fahrradelement weist ein erstes Fahrradbauteil sowie ein zweites Fahrradbauteil auf. Die beiden Fahrradbauteile sind über ein Schwenkelement verbunden, so dass die beiden Fahrradbauteile gegeneinander verschwenkbar bzw. verdrehbar sind. Erfindungsgemäß weist das Schwenkelement zur Dämpfung der Schwenkbewegung eine Dämpfungsflüssigkeit auf. Erfindungsgemäß erfolgt die Dämpfung der Schwenkbewegung somit nicht über einen gesonderten Lineardämpfer, sondern über in das Schwenkelement integrierte Dämpfungsmittel, bei denen es sich erfindungsgemäß um eine Dämpfungsflüssigkeit handelt. Es ist besonders bevorzugt, dass ferner ein Variierungselement vorgesehen ist, um die Dämpfungseigenschaften zu verändern.

Bei dem Variierungselement kann es sich um eine oder mehrere Öffnungen handeln, durch die die Dämpfungsflüssigkeit zur Dämpfung einer Schwenkbewegung strömt, wobei die Anzahl und/ oder der Querschnitt der Öffnungen verändert werden kann. Besonders bevorzugt ist es jedoch, dass das Variierungselement ein Magnetelement aufweist. Mit Hilfe des Magnetelements kann auf die Dämpfungsflüssigkeit derart eingewirkt werden, dass sich hierdurch die Dämpfungseigenschaften verändern. Dies ist durch Verwendung einer geeigneten Dämpfungsflüssigkeit möglich, deren Viskosität sich aufgrund eines Magnetfeldes verändert. Insbesondere weisen derartige Flüssigkeiten magnetisierbare Partikel wie Eisenpartikel auf, so dass durch eine entsprechende Ausrichtung dieser Partikel aufgrund des Magnetfelds eine Viskositätsveränderung möglich ist. Hierdurch ist es möglich, ein in das Schwenkelement integriertes Dämpfungselement vorzusehen, dessen Dämpfungscharakteristik zudem auf einfache Weise veränderbar ist.

Besonders bevorzugt ist es zur Veränderung der Viskosität der Dämpfungsflüssigkeit, dass das auf die Flüssigkeit einwirkende Magnetfeld veränderbar ist. Dies ist beispielsweise dadurch realisierbar, dass der Abstand zwischen dem Magnet und der Dämpfungsflüssigkeit verändert wird, so dass das auf die Flüssigkeit einwirkende Magnetfeld variiert. Auch können beispielsweise zwischen den Magneten und der Dämpfungsflüssigkeit Element wie Plättchen oder dergleichen angeordnet werden, die das Magnetfeld verändern, insbesondere dämpfen oder verstärken. Bei einer besonders bevorzugten Ausführungsform ist das von dem Magneten erzeugte Magnetfeld selbst veränderbar. Dies könnte beispielsweise durch Ein- oder Ausschieben eines innerhalb eines Magneten angeordneten Kerns erfolgen. Besonders bevorzugt ist es jedoch, einen Elektromagneten vorzusehen, so dass das Magnetfeld über ein elektrisches Signal veränderbar ist. Beispielsweise ist es möglich, den Elektromagneten über einen Schalter zu aktivieren oder zu deaktivieren. Hierzu ist es lediglich erforderlich, als Energiequelle beispielsweise eine Batterie vorzusehen, so dass auf einfache Weise ein Schwenkelement zur Dämpfung aktiviert oder deaktiviert werden kann.

Besonders bevorzugt ist es, dass das Variierungselement, bei dem es sich insbesondere um einen Elektromagneten handelt, mit einer Steuereinrichtung verbunden ist. Die Steuereinrichtung kann hierbei ein Verschieben des Magneten selbst, ein Verändern eines Kanalquerschnitts durch den die Dämpfungsflüssigkeit strömt und/ oder ein Verändern des Magnetfeldes eines Elektromagneten steuern. Hierbei ist es insbesondere auch möglich, die Dämpfungseigenschaften des Schwenkelements nicht nur zu aktivieren oder zu deaktivieren, sondern auch verschiedene Stufen der Dämpfung zu realisieren. Dies kann beispielsweise durch Vorsehen mehrerer Elektromagneten erfolgen, die einzeln an- oder ausgeschaltet werden können. Des Weiteren ist es bevorzugt, dass die Steuereinrichtung ein elektrisches Steuersignal erzeugt, um insbesondere die vorstehend beschriebenen Eigenschaften zu realisieren.

In einer besonders bevorzugten Ausführungsform ist die Steuereinrichtung mit mindestens einem Sensor verbunden. Das von dem mindestens einen Sensor an die Steuereinrichtung übermittelte Sensorsignal wird vorzugsweise bei einer Ansteuerung des Variierungselements, insbesondere des mindestens einen Elektromagneten berücksichtigt. Hierbei kann die Steuerung des Variierungselements ausschließlich anhand von Steuersignalen oder auch in Verbindung mit vom Benutzer veränderbaren Eingaben erfolgen. Der Benutzer kann beispielsweise über einen Touchscreen oder ein anderes Eingabeelement, wie einen Dreh- oder Schiebeschalter das Signal verändern und somit die Dämpfungscharakteristik gegebenenfalls auch während des Fahrens variieren.

Bei den Sensoren kann es sich beispielsweise um Bewegungssensoren handeln, die z. B. das Fahren im Wiegetritt detektieren. Bei dieser Fahrsituation ist gegebenenfalls ein möglichst steifer Fahrradrahmen gewünscht, so dass die entsprechenden Schwenkelemente, insbesondere durch Erhöhen der Viskosität der Dämpfungsflüssigkeit versteift werden.

In besonders bevorzugter Ausführungsform weist das Schwenkelement ein erstes sowie ein zweites Schwenkbauteil auf. Das erste Schwenkbauteil ist hierbei mit dem ersten Fahrradbauteil und das zweite Schwenkbauteil mit dem zweiten Fahrradbauteil verbunden. Vorzugsweise sind die beiden Schwenkbauteile gegeneinander verdrehbar, wobei durch die Dämpfungsflüssigkeit und insbesondere das vorstehende Variieren der Viskosität die Dämpfungscharakteristik eingestellt werden kann, wie leicht bzw. schwer die beiden Bauteile gegeneinander verschwenkbar sind.

Besonders bevorzugt ist es, dass durch die beiden Schwenkbauteile zumindest zwei mit Dämpfungsflüssigkeit gefüllte Kammern ausgebildet sind. Beim Verdrehen der beiden Schwenkbauteile gegeneinander wird Dämpfungsflüssigkeit von einer Kammer in eine der anderen Kammern gefördert. Hierbei ist es bevorzugt, dass das Fördern der Dämpfungsflüssigkeit durch mindestens einen Verbindungskanal erfolgt, der zumindest zwei Kammern miteinander verbindet. Beim Verbindungskanal kann es sich um eine Öffnung, einen Spalt oder dergleichen handeln. Durch Verändern der Viskosität der Dämpfungsflüssigkeit ändert sich das Strömungsverhalten der Flüssigkeit und somit die Menge der durch mindestens einen Verbindungskanal bei gleicher Kraft pro Zeiteinheit förderbaren Flüssigkeit. Hierdurch sind die Dämpfungseigenschaften variierbar.

Des Weiteren ist es bevorzugt, dass eines der beiden Schwenkbauteile das jeweils andere Schwenkbauteil zumindest teilweise umgibt. Hierbei ist es wiederum besonders bevorzugt, dass die beiden Schwenkbauteile im Wesentlichen zylindrisch ausgebildet sind oder zumindest teilweise eine zylindrische Form aufweisen. Hierdurch ist es möglich, das eine Schwenkbauteil zumindest teilweise innerhalb des anderen Schwenkbauteils anzuordnen, wobei es vorzugsweise im Wesentlichen konzentrisch zum im Wesentlichen zylindrischen Körper angeordnet ist. Diese können insbesondere zur Ausbildung der Kammern Zwischenwände, Stege, Ansätze oder dergleichen aufweisen.

Des Weiteren ist es in einer besonders bevorzugten Ausführungsform möglich, zwischen den beiden Schwenkbauteilen ein Lager wie ein Gleit- oder Wälzlager anzuordnen.

Die erfindungsgemäß ausgestalteten Schwenkelemente können zwischen unterschiedlichen Fahrradbauteilen vorgesehen sein. Insbesondere können derartige Schwenkelemente, deren Dämpfungscharakteristik wie vorstehend beschrieben auf einfache Weise veränderbar ist, als Schwenkelemente zwischen einem gefederten Hinterbau und einem Rahmen angeordnet sein. Hierbei kann gegebenenfalls ein üblicherweise vorgesehener Lineardämpfer zur Federung des Hinterbaus vollständig entfallen oder zumindest einfacher ausgebildet sein. Entsprechende erfindungsgemäße Schwenkelemente können auch zwischen Fahrradbauteilen des Rahmens, wie beispielsweise zwischen dem Oberrohr und dem Sattelstützrohr, dem Oberrohr und dem Gabelrohr und dergleichen vorgesehen sein. Des Weiteren ist es möglich, derartige erfindungsgemäße Schwenkelemente beispielsweise in den Gabelbeinen einer Fahrradgabel vorzusehen. Da diese erfindungsgemäß eine Dämpfungscharakteristik aufweisen, kann hierdurch eine gedämpfte Vorderradgabel auf einfache Weise realisiert werden. Da erfindungsgemäß durch das Vorsehen des Variierungselements eine Veränderung der Dämpfungseigenschaften möglich ist, kann eine sehr individuelle gegebenenfalls auch dynamische Abstimmung der Vorderradgabel erfolgen.

Nachfolgend wird die Erfindung anhand einer bevorzugten Ausführungsform näher erläutert.

Es zeigen:
- Figur 1: eine stark vereinfachte schematische Darstellung einer bevorzugten Ausführungsform eines Fahrradelements und
- Figur 2: eine bevorzugte Ausführungsform eines in das Fahrradelement integrierten erfindungsgemäß gedämpften Schwenkelements in schematischer Schnittansicht.

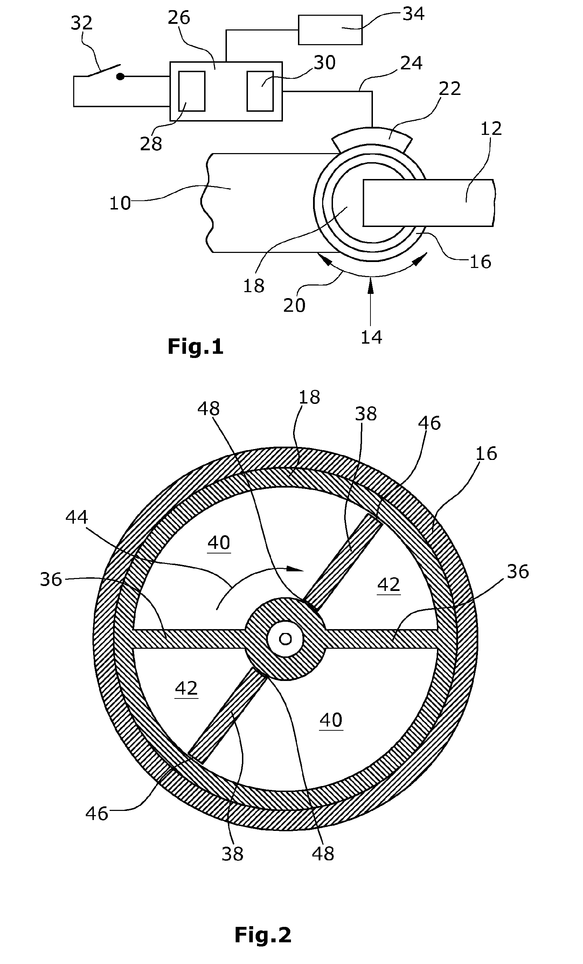

Das Fahrradelement weist ein erstes Fahrradbauteil 10 sowie ein zweites Fahrradbauteil 12 auf. Beispielsweise kann es sich bei dem zweiten Fahrradbauteil 12 um eine Sattelstrebe handeln, die schwenkbar mit einer Hinterradfederung, bei dem es sich sodann um das erste Fahrradbauteil 10 handeln würde, verbunden ist. Ebenso kann es sich um jede andere gelenkige Verbindung handeln. Das erste Fahrradbauteil 10 ist mit dem zweiten Fahrradbauteil 12 über ein Schwenkelement 14 verbunden. Hierbei weist in dem dargestellten Ausführungsbeispiel das Schwenkelement 14 ein erstes Schwenkbauteil 16 auf, mit dem das erste Fahrradbauteil 10 fest verbunden ist. Das zweite Fahrradbauteil 12 ist mit einem zweiten Schwenkbauteil 18 fest verbunden. Die beiden Schwenkbauteile 16, 18 sind in Richtung eines Pfeils 20 gegeneinander verschwenkbar. Zwischen den beiden Schwenkbauteilen 16, 18 kann ein nicht näher dargestelltes Gleit- oder Wälzlager angeordnet sein. Ferner ist in dem Schwenkelement 14 eine Dämpfungsflüssigkeit zur Dämpfung einer Schwenkbewegung vorgesehen. Die Dämpfung kann wie aus Figur 2 ersichtlich und unten stehend erläutert, erfolgen.

Zum Variieren der Dämpfungseigenschaften ist im dargestellten Ausführungsbeispiel als Variierungselement ein Elektromagnet 22 vorgesehen. Von dem Elektromagnet 22 wird ein Magnetfeld erzeugt, das auf die in dem Schwenkelement vorgesehene Dämpfungsflüssigkeit einwirkt. Je nach Stärke des Magnetfelds verändert sich die Viskosität der Dämpfungsflüssigkeit, wobei es sich bei der Dämpfungsflüssigkeit vorzugsweise um eine magnetorheologische Flüssigkeit handelt.

Der Elektromagnet 22 ist über eine elektrische Leitung 24 mit einer Steuereinrichtung 26 verbunden. Die Steuereinrichtung 26 weist insbesondere eine Energiequelle wie eine Batterie 28 sowie eine Steuereinheit 30 zur Signalverarbeitung auf. Die Steuereinrichtung 26 ist ferner im dargestellten Ausführungsbeispiel mit einem Schalter 32 verbunden, wobei es in einfacher Ausführungsform möglich wäre, über den Schalter 32 eine Energiezufuhr zu dem Elektromagneten 22 zu- oder abzuschalten. Durch Vorsehen einer Steuereinheit 30 in der Steuereinrichtung 26 kann ein Variieren des zugeführten Stroms zu dem Elektromagneten 22 vorgenommen werden. Die Variierung kann insbesondere von Sensorsignalen abhängig gemacht werden, die von Sensoren 34 erzeugt werden. Bei den Sensoren 34 kann es sich beispielsweise um Bewegungssensoren handeln, die detektieren, ob ein Fahrrad beispielsweise im Wiegetritt gefahren wird, ob das Fahrrad über einen unebenen oder relativ ebenen Bodenbelag bewegt wird etc. Des Weiteren ist es selbstverständlich möglich, den Schalter 32 derart auszugestalten, dass hierdurch eine insbesondere stufenfreie Variierung der Dämpfungscharakteristik möglich ist.

Das Schwenkgelenk 14 kann beispielsweise wie in Figur 2 dargestellt, aufgebaut sein. Hierbei ist im dargestellten Ausführungsbeispiel das zylindrische äußere erste Schwenkbauteil 16 mit dem nicht dargestellten ersten Fahrradbauteil 10 verbunden. Das zweite Schwenkbauteil 18, das mit dem ebenfalls nicht dargestellten zweiten Fahrradbauteil 12 verbunden ist, ist im Wesentlichen zylindrisch ausgestaltet und innerhalb des ersten Schwenkbauteils 16 angeordnet. Das innenliegende zweite Schwenkbauteil 18 ist mit radial verlaufenden Stegen bzw. Trennwänden 36 verbunden. Das erste Schwenkbauteil 16 ist ebenfalls mit radial verlaufenden Stegen bzw. Trennwänden verbunden. Zwischen den Stegen bzw. Trennwänden 36, 38 sind somit Kammern 40 und 42 ausgebildet. Durch Verdrehen des ersten Schwenkbauteils 16 gegenüber dem zweiten Schwenkbauteil 18 in Richtung eines Pfeils 44 wird das Volumen der Kammern 42 verkleinert und das Volumen der Kammern 40 vergrößert. Da in allen Kammern 40, 42 Dämpfungsflüssigkeit vorhanden ist, muss bei der Drehbewegung in Richtung des Pfeils 44 Dämpfungsflüssigkeit aus den Kammern 42 in die Kammern 40 strömen. Dies erfolgt durch Spalte 46, 48 oder durch andere in den Trennwänden 36, 38 vorgesehene Öffnungen.

Da es mit Hilfe des Elektromagnets 22 (Figur 1) möglich ist die Viskosität der Dämpfungsflüssigkeit zu verändern, kann auf einfache Weise die Dämpfungscharakteristik verändert werden. Bei einer entsprechenden Veränderung der Viskosität kann auch ein vollständiges Blockieren des Schwenkgelenks erfolgen.

## Patentansprüche

1. Fahrradelement,
mit einem ersten Fahrradbauteil (10),
einem zweiten Fahrradbauteil (12) und
einem das erste Fahrradbauteil (10) mit dem zweiten Fahrradbauteil (12) verbindende Schwenkelement (14),
**dadurch gekennzeichnet, dass**
das Schwenkelement (14) eine Dämpfungsflüssigkeit zur Dämpfung von Schwenkbewegungen aufweist
und ein Variierungselement (22) vorgesehen ist, um die Dämpfungseigenschaften zu verändern.

2. Fahrradelement nach Anspruch 1, **dadurch gekennzeichnet, dass** das Variierungselement ein Magnetelement (22) aufweist, das auf die Dämpfungsflüssigkeit einwirkt.

3. Fahrradelement nach Anspruch 2, **dadurch gekennzeichnet, dass** das auf die Dämpfungsflüssigkeit einwirkende Magnetfeld veränderbar ist.

4. Fahrradelement nach Anspruch 2 oder 3, **dadurch gekennzeichnet, dass** das von dem Magnetelement (22) erzeugte Magnetfeld veränderbar ist.

5. Fahrradelement nach einem der Ansprüche 2 bis 4, **dadurch gekennzeichnet, dass** das Magnetelement einen Elektromagnet (22) aufweist.

6. Fahrradelement nach einem der Ansprüche 1 bis 5, **dadurch gekennzeichnet, dass** das Variierungselement mit einer Steuereinrichtung (26) verbunden ist.

7. Fahrradelement nach Anspruch 6, **dadurch gekennzeichnet, dass** die Steuereinrichtung (26) ein elektrisches Steuersignal erzeugt.

8. Fahrradelement nach Anspruch 6 oder 7, **dadurch gekennzeichnet, dass** die Steuereinrichtung (26) mit mindestens einem Sensor (34) verbunden ist, wobei die Steuereinrichtung (26) elektrische Steuersignale in Abhängigkeit des von dem mindestens einen Sensor (34) empfangenen Sensorsignals erzeugt.

9. Fahrradelement nach einem der Ansprüche 1 bis 8, **dadurch gekennzeichnet, dass** das Schwenkelement (14) ein erstes Schwenkbauteil (16), das mit dem ersten Fahrradbauteil (10) verbunden ist und ein zweites Schwenkbauteil (18), das mit dem zweiten Fahrradbauteil (12) verbunden ist, aufweist.

10. Fahrradelement nach Anspruch 9, **dadurch gekennzeichnet, dass** die beiden Schwenkbauteile (16, 18) gegeneinander verdrehbar bzw. verschwenkbar sind.

11. Fahrradelement nach Anspruch 9 oder 10, **dadurch gekennzeichnet, dass** durch die beiden Schwenkbauteile (16, 18) mindestens zwei mit Dämpfungsflüssigkeit gefüllte Kammern (40, 42) ausgebildet sind, wobei beim gegeneinander Verdrehen der beiden Schwenkbauteile (16, 18) Dämpfungsflüssigkeit von einer Kammer (40) in die andere Kammer (42) gefördert wird.

12. Fahrradelement nach Anspruch 11, **dadurch gekennzeichnet, dass** zwischen den beiden Kammern mindestens ein Verbindungskanal (46, 48) vorgesehen ist.

13. Fahrradelement nach einem der Ansprüche 9 bis 12, **dadurch gekennzeichnet, dass** eines der beiden Schwenkbauteile (16, 18) das andere Schwenkbauteil (18, 16) zumindest teilweise umgibt.

14. Fahrradelement nach einem der Ansprüche 9 bis 13, **dadurch gekennzeichnet, dass** beide Schwenkbauteile (16, 18) im Wesentlichen zylindrisch ausgebildet sind.

15. Fahrradelement nach einem der Ansprüche 9 bis 11, **dadurch gekennzeichnet, dass** das erste und/ oder zweite Schwenkbauteil (16, 18) zumindest teilweise von dem Variierungselement (22) umgeben ist oder das Variierungselement (22) zumindest teilweise innerhalb des ersten und/ oder zweiten Schwenkbauteils (16, 18) angeordnet ist.

16. Fahrradelement nach einem der Ansprüche 9 bis 15, **dadurch gekennzeichnet, dass** zwischen dem ersten und dem zweiten Schwenkbauteil (16, 18) ein Lager angeordnet ist.
